(19) Europäisches Patentamt
European Patent Office
Office européen des brevets

(11) **EP 3 450 638 A1**

(12) **EUROPÄISCHE PATENTANMELDUNG**

(43) Veröffentlichungstag:
**06.03.2019 Patentblatt 2019/10**

(51) Int Cl.:
**E03B 7/02** (2006.01)      **G05B 15/02** (2006.01)
**G06Q 50/06** (2012.01)

(21) Anmeldenummer: **17188473.7**

(22) Anmeldetag: **30.08.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Fink, Rafael**
  **81829 München (DE)**
• **Moll, Christoph**
  **81549 München (DE)**

(54) **STEUERUNG EINES WASSERVERSORGUNGSNETZES**

(57) Ein Wasserversorgungsnetz umfasst Knotenkomponenten und Kantenkomponenten, wobei die Kantenkomponenten Wasser zwischen den Knotenkomponenten transportieren. Zumindest eine der Kantenkomponenten ist bezüglich ihres Durchflussverhaltens für Wasser steuerbar. Ein Verfahren zum Steuern des Wasserversorgungsnetzes umfasst Schritte des Bestimmens eines Planungshorizonts, der eine Anzahl Zeitscheiben umfasst; des Bestimmens von oberen und unteren Grenzen für Einspeisungen sowie von voraussichtlichen Entnahmen von Wasser in den Zeitscheiben; des Bestimmens möglicher Betriebskonfigurationen der wenigstens einen Kantenkomponente; des Bestimmens von Energiekosten für eine Ansteuerung der Kantenkomponente in den Zeitscheiben; des Bestimmens von zulässigen Zuständen von Knotenkomponenten; des Bestimmens von aktuellen Zuständen (Anfangszuständen) von Kanten- oder Knotenkomponenten; und des Bestimmens eines Steuerplans für die wenigstens eine Kantenkomponente auf der Basis der bestimmten Informationen derart, dass eine vorbestimmte Wasserbilanz in jeder Zeitscheibe im zeitlichen Mittel eingehalten ist. Der Steuerplan umfasst eine zeitliche Abfolge von Ansteuerungen der wenigstens einen Kantenkomponente und erlaubt einen Übergang zwischen unterschiedlichen Ansteuerungen der wenigstens einen Kantenkomponente nur einmal in jeder Zeitscheibe sowie einmal an einem Übergang von einer Zeitscheibe zur nächsten.

FIG 1

EP 3 450 638 A1

**Beschreibung**

Die vorliegende Erfindung betrifft ein Wasserversorgungsnetz. Insbesondere betrifft die Erfindung die Steuerung von Komponenten eines Wasserversorgungsnetzes.

Stand der Technik

Ein Wasserversorgungsnetz ist dazu eingerichtet, eine Vielzahl privater und/oder gewerblicher Nutzer mit Wasser zu versorgen. Das Wasserversorgungsnetz kann modelliert werden, indem zwischen Knoten- und Kantenkomponenten unterschieden wird, wobei der Wassertransport über die Kantenkomponenten zwischen Knotenkomponenten erfolgt. Knotenkomponenten können Einspeiser wie Brunnen, Quellen oder Fremdwasserlieferanten; Wasserverbraucher; Wasserbehälter, etwa Tanks oder Becken; und Wasserversorgungs- bzw. sammelpunkte umfassen. Kantenkomponenten können durch Rohre, Pumpen oder Ventile repräsentiert sein.

Das Wasserversorgungsnetz wird gesteuert, indem der Durchfluss von Wasser durch die einzelnen Komponenten beeinflusst wird. Dabei sind zahlreiche Nebenbedingungen zu beachten. Beispielsweise sind bestimmte Komponenten analog, andere nur binär steuerbar. Bestimmte Kombinationen von Ansteuerungen mehrerer Komponenten können unzulässig sein. Um das Wasserversorgungsnetz wirtschaftlich zu betreiben ist allgemein eine möglichst gleichmäßige Steuerung der Komponenten vorteilhaft. Beispielsweise kann ein Energiebedarf minimiert sein, wenn eine Pumpe mit mittlerer Drehzahl dauerhaft betrieben wird, statt sie periodisch mit hoher Drehzahl zu betreiben und wieder abzuschalten. Insbesondere sind also Gesamtkosten zu minimieren, welche die Energiekosten und die Schaltungskosten umfassen, und gleichzeitig die Wasserversorgung für die Verbraucher zu gewährleisten.

Bestehende Planungssysteme für die Steuerung eines Wasserversorgungsnetzes basieren häufig auf vereinfachten Modellen, die beispielsweise keine nur ganzzahligen Zustands- oder Entscheidungsvariablen berücksichtigt. Ein solchermaßen bestimmtes Steuerschema kann die zusätzliche Anwendung einer Heuristik erfordern, um den berechneten Plan für die Steuerung der Komponenten zulässig umsetzen zu können. Beispielsweise kann ein Ventil betroffen sein, das nur entweder geöffnet oder geschlossen sein kann. Eine gebrochene Variable für den Zustand des Ventils muss dann angepasst werden. Häufig müssen in der Folge auch andere Variablen angepasst werden, um den durch die Anpassung eingetragenen Effekt zu kompensieren.

Eine der Erfindung zu Grunde liegende Aufgabe besteht darin, eine verbesserte Technik zur Steuerung eines Wasserversorgungsnetzes bereitzustellen. Die Erfindung löst diese Aufgabe mittels der Gegenstände der unabhängigen Ansprüche. Unteransprüche geben bevorzugte Ausführungsformen wieder.

Ein Wasserversorgungsnetz umfasst Knotenkomponenten und Kantenkomponenten, wobei die Kantenkomponenten Wasser zwischen den Knotenkomponenten transportieren. Zumindest eine der Kantenkomponenten ist bezüglich ihres Durchflussverhaltens für Wasser steuerbar. Ein Verfahren zum Steuern des Wasserversorgungsnetzes umfasst Schritte des Bestimmens eines Planungshorizonts, der eine Anzahl Zeitscheiben umfasst; des Bestimmens von oberen und unteren Grenzen für Einspeisungen von Wasser ins Wasserversorgungsnetz in den Zeitscheiben; des Bestimmens von voraussichtlichen Entnahmen von Wasser aus dem Wasserversorgungsnetz in den Zeitscheiben; des Bestimmens möglicher Betriebskonfigurationen der wenigstens einen Kantenkomponente; des Bestimmens von Energiekosten für eine Ansteuerung der wenigstens einen steuerbaren Kantenkomponente in den Zeitscheiben; des Bestimmens von zulässigen Zuständen von Knotenkomponenten des Wasserversorgungsnetzes; des Bestimmens von aktuellen Zuständen (Anfangszuständen) von Komponenten des Wasserversorgungsnetzes; und des Bestimmens eines Steuerplans für die wenigstens eine steuerbare Kantenkomponente auf der Basis der bestimmten Informationen derart, dass eine vorbestimmte Wasserbilanz des Wasserversorgungsnetzes in jeder Zeitscheibe im zeitlichen Mittel eingehalten ist. Der Steuerplan umfasst eine zeitliche Abfolge von Ansteuerungen der wenigstens einen Kantenkomponente. Dabei erlaubt der Steuerplan einen Übergang zwischen unterschiedlichen Ansteuerungen der wenigstens einen Kantenkomponente nur einmal in jeder Zeitscheibe sowie einmal an einem Übergang von einer Zeitscheibe zur folgenden Zeitscheibe. Der Übergang kann insbesondere eine Schaltung oder eine Änderung einer Betriebskonfiguration eines Kantenelements umfassen.

Eine Betriebskonfiguration umfasst bevorzugt die Konfiguration einer Kantenkomponente des Wasserversorgungsnetzes. Die Konfiguration kann insbesondere einen Aktivierungszustand einer steuerbaren Komponente umfassen und ferner eine Energieaufnahme der Kantenkomponente oder einen Durchfluss durch die Kantenkomponente. Die Betriebskonfiguration des Wasserversorgungsnetzes kann Betriebskonfigurationen aller Kantenkomponenten umfassen.

Eine steuerbare Kantenkomponente kann aktiv sein, wobei sie angesteuert wird und Energie aufnimmt, oder nicht aktiv bzw. passiv, wobei sie nicht angesteuert wird und keine Energie aufnimmt. Ein Übergang vom aktiven in den passiven Zustand oder umgekehrt wird Schaltung oder Schaltvorgang genannt. Eine Schaltung kann auch einen Übergang zwischen zwei aktiven Betriebskonfigurationen umfassen, die insbesondere unterschiedlich großen Energieaufnahmen zugeordnet sind.

Der Erfindung liegt die Erkenntnis zu Grunde, dass es zur effizienten und wirtschaftlichen Steuerung des Wasserversorgungsnetzes nicht nur erforderlich ist, die Versorgung von Verbrauchern mit Wasser zu gewährleisten und einen Energieverbrauch für eine steuerbare Komponente zu minimieren, sondern auch vorteilhaft, eine Kantenkomponente möglichst zu schonen, indem ihre Schaltvorgänge minimiert werden. Die Komponente kann einen beispielsweise elektrischen Antrieb aufweisen und insbesondere eine Pumpe oder eine ähnliche Einrichtung umfassen. Der elektrische Antrieb kann beispielsweise einen Asynchronmotor umfassen, der eine beträchtliche Leistung aufweist, beispielsweise im Bereich mehrerer zehn oder mehrerer hundert Kilowatt. Beim Einschalten des Asynchronmotors besteht ein Schlupf von 100% zwischen einer magnetischen und einer mechanischen Drehzahl und ein großer Anteil des Schlupfs kann in Wärme statt in Drehmoment umgesetzt werden. Der elektrische Antrieb der Komponente kann daher bei jedem Einschalten thermisch beansprucht werden, sodass seine Lebensdauer verringert werden kann. Durch das Minimieren von Schaltvorgängen kann die Lebensdauer des Kantenelements signifikant verlängert werden.

Das Verfahren kann eine Grobplanung in Form des Steuerplans bereitstellen, wobei eine tatsächliche Steuerung des Wasserversorgungsnetzes in Abhängigkeit von technischen Parametern, insbesondere eines tatsächlichen Zu- oder Abflusses von Wasser sowie gegebenenfalls von einem Pegelstand eines Wasserbehälters, durchgeführt werden kann. Der Planungshorizont kann beispielsweise einen oder mehrere Tage betragen und eine Zeitscheibe kann beispielsweise eine Stunde betragen.

Die weiteren Übergänge zwischen unterschiedlichen Ansteuerungen mehrerer Kantenkomponenten erfolgen bevorzugt gleichzeitig. Dadurch können Nebenbedingungen eingehalten werden, die durch die Konfiguration oder Architektur des Wasserversorgungsnetzes vorgegeben ist. Beispielsweise kann das Einschalten einer Pumpe einen Wasserfluss in eine Knotenkomponente bewirken, die mit einer weiteren steuerbaren Kantenkomponente verbunden ist und somit auch angesteuert werden sollte.

Der Steuerplan kann für mehrere steuerbare Kantenkomponenten erstellt werden, wobei die zeitlichen Abfolgen der Ansteuerungen der Kantenkomponente aufeinander abgestimmt sind. Dadurch kann die Bewegung von Wasser durch das Wasserversorgungsnetz durch die Ansteuerung der steuerbaren Kantenkomponenten verbessert reflektiert werden.

Der Steuerplan kann derart bestimmt werden, dass eine Menge Wasser, die in einer Zeitscheibe an einer Knotenkomponente gespeichert ist, der in einer vorangehenden Zeitscheibe in der Knotenkomponente gespeicherten Menge Wasser, zuzüglich einer einfließenden Menge Wasser und abzüglich einer abfließenden Menge Wasser entspricht. Diese und andere Nebenbedingungen können leicht in die Bestimmung des Steuerplans einfließen. Praktisch können viele Nebenbedingungen formuliert werden, die sicherstellen können, dass der Steuerplan unmittelbar zur Steuerung des Wasserversorgungsnetzes verwendet werden kann und der Zwischenschritt einer Anpassung oder Validierung nicht erforderlich ist.

Die möglichen Zustände oder Zustandskombinationen der Kanten- und/oder Knotenkomponenten können physikalische Bedingungen oder Grenzwerte modellieren, innerhalb derer das Wasserversorgungsnetz betrieben werden kann. Beispielsweise können Schranken an die Durchflussmengen der Pumpen im jeweiligen Zustand und die zugehörigen Energieverbräuche gekoppelt sein, oder Schranken an die Behälter-Füllstände jeweils für jede Zeitscheibe.

Eine Betriebskonfiguration umfasst bevorzugt eine zulässige Durchflussrate von Wasser und einen zulässigen Energieverbrauch einer steuerbaren Kantenkomponente.

Die Knotenkomponenten kann einen Tank umfassen und ein Zustand des Tanks kann ein Intervall zulässiger Füllstände betreffen. Die Speicherfunktion eines Tanks kann so verbessert modelliert oder ausgenutzt werden.

Die wenigstens eine Kantenkomponente kann eine aktive Einrichtung umfassen, deren Energieaufnahme von ihrer Ansteuerung abhängig ist, wobei der Steuerplan derart bestimmt wird, dass die Summe der Energieaufnahmen aller Kantenkomponenten über den gesamten Planungshorizont möglichst gering ist. So können Betriebskosten der Kantenkomponenten weiter verringert werden.

Der Steuerplan kann derart bestimmt werden, dass Kosten, die Schaltungen einer Kantenkomponente zugeordnet sind, möglichst minimiert werden. Wartungskosten für die gesteuerte Kantenkomponente können so weiter verringert werden.

Die wenigstens eine Kantenkomponente kann eine aktive Einrichtung umfassen, deren Energieaufnahme von ihrer Ansteuerung abhängig ist. Der Steuerplan kann derart bestimmt werden, dass die Summe der Energieaufnahmen aller Kantenkomponenten über den gesamten Planungshorizont möglichst gering ist. Die Wirtschaftlichkeit des Wasserversorgungsnetzes kann dadurch gesteigert werden. Ferner kann die Lebensdauer einer Kantenkomponente auch durch eine schonende Betriebsweise mit wenigen Schaltungen erhöht sein.

Mehrere steuerbare Kantenkomponenten können aktive Einrichtungen umfassen und die zeitlichen Abfolgen der Ansteuerungen der Kantenkomponenten können so bestimmt werden, dass eine gesamte Leistung der aktiven Kantenkomponenten eine vorbestimmte Leistung nicht übersteigt. Dadurch kann berücksichtigt werden, dass eine Energieversorgung üblicherweise den gleichzeitigen Betrieb nur einer Teilmenge der Kantenkomponenten erlaubt. Würde die Anschlussleistung des Energieversorgungsnetzes überstiegen, so könnte eine Abschaltung erfolgen, sodass die angeschlossenen Kantenkomponenten nicht mehr betrieben werden können.

Die wenigstens eine steuerbare Kantenkomponente kann eine aktive Einrichtung umfassen, deren Energieaufnahme negativ sein kann. Eine solche Einrichtung kann insbesondere eine Turbine umfassen. Auch andere Knoten- oder Kantenelemente können auf der Basis der angegebenen Definitionen leicht modelliert werden. Das Verfahren kann so auch an einem komplexen oder au-ßergewöhnlichen Wasserversorgungsnetz eingesetzt werden.

Der Steuerplan kann insbesondere mittels eines gemischt ganzzahligen linearen Programms bestimmt werden. Für ein derartiges Programm stehen leistungsfähige Lösevorrichtungen ("Solver") bereit, die üblicherweise als Programm auf einem handelsüblichen Computer ablaufen. Die Lösevorrichtungen erlauben eine rasche und effiziente Suche einer optimierten Lösung innerhalb eines sehr großen Suchraums. Dabei können beliebige Optimierungskriterien oder Nebenbedingungen berücksichtigt werden, die in Form von linearen Funktionen beschreibbar sind. Sollen nichtlineare Nebenbedingungen verwendet werden, so muss der Solver hierfür geeignet gewählt werden (MINLP: Mixed Integer Nonlinear Programming), wozu jedoch eine erheblich größere Rechenleistung oder eine entsprechend längere Suchzeit erforderlich sein kann, so dass dies in der Praxis häufig nicht praktikabel ist.

Genügend Rechenleistung oder Laufzeit vorausgesetzt kann eine existierende optimale Lösung stets gefunden werden. Schon vorher kann eine weniger gute Lösung gefunden werden, die durch weitere Optimierung verbessert werden kann. Für eine bestimmte Lösung ist üblicherweise bekannt, wie weit ihre Qualität von einer theoretisch erreichbaren Qualität entfernt liegt ("Gap"). Eine Entscheidung zwischen dem Akzeptieren einer bereitgestellten Lösung - bzw. eines bereitgestellten Steuerplans - und einem weiteren Optimieren kann daher verbessert getroffen werden.

Eine Vorrichtung zur Steuerung des oben beschriebenen Wasserversorgungsnetzes umfasst eine Verarbeitungseinrichtung, die dazu eingerichtet ist, ein hierin beschriebenes Verfahren durchzuführen. Die Vorrichtung kann vorteilhaft zur Bereitstellung eines Steuerplans verwendet werden, auf dessen Basis das Wasserversorgungsnetz dann gesteuert werden kann. Dabei kann die Bestimmung des Steuerplans unabhängig von einer Betriebssteuerung des Wasserversorgungsnetzes erfolgen. Unterschiedliche Steuervorrichtungen können dadurch besser an ihre jeweiligen Zwecke angepasst sein.

Die Vorrichtung kann ferner eine Schnittstelle zur Verbindung mit der wenigstens einen Kantenkomponente umfassen, wobei die Verarbeitungseinrichtung dazu eingerichtet ist, die Kantenkomponente in Abhängigkeit des bestimmten Steuerplans anzusteuern. Die Vorrichtung kann auch das tatsächliche Steuern des Wasserversorgungsnetzes übernehmen, wobei üblicherweise nicht nur der Steuerplan abgearbeitet wird, sondern im Rahmen der Vorgaben des Steuerplans und in Abhängigkeit von aktuellen Parametern des Wasserversorgungsnetzes die Steuerung durchgeführt wird. Effektiv kann dadurch eine kosten- und verschleißoptimierte Steuerung des Netzes bewirkt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

Fig. 1 ein beispielhaftes Wasserversorgungsnetz; und

Fig. 2 ein Ablaufdiagramm eines exemplarischen Verfahrens zum Steuern eines Wasserversorgungsnetzes

darstellt.

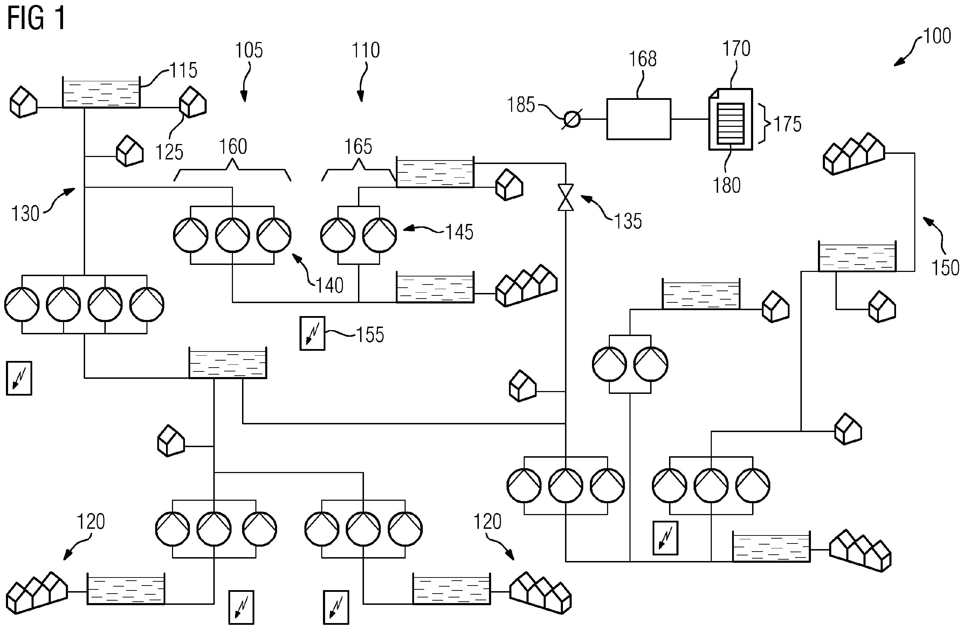

Figur 1 zeigt ein Wasserversorgungsnetz 100, das beispielsweise ein kommunales Versorgungsnetz zur Versorgung mit Trink- oder Brauchwasser sein kann. Das Wasserversorgungsnetz 100 umfasst Knotenkomponenten 105 und Kantenkomponenten 110, wobei eine Kantenkomponente 110 Wasser zwischen zwei Knotenkomponenten 105 transportiert.

Beispielhafte Knotenkomponenten 105 umfassen einen Tank 115, einen Wassereinspeiser 120, einen Wasserverbraucher 125 und einen Wasserverteilungspunkt 130. Der Wassereinspeiser 120, auch einfach Einspeiser 120 genannt, umfasst üblicherweise einen Brunnen, eine Quelle oder einen Übergabepunkt aus einem anderen Wassernetz. Ein Wasservolumen, das pro Zeit aus einem Einspeiser 120 in das Wasserversorgungsnetz 100 fließt, kann üblicherweise nicht oder nur zwischen vorbestimmten Grenzen beeinflusst werden. Ein Wasserverbraucher 125 betrifft üblicherweise einen Endverbraucher, etwa einen privaten Haushalt, eine gewerbliche Einrichtung oder eine öffentliche Entnahmestelle. Wie viel Wasser durch Wasserverbraucher 125 aus dem Wasserverteilungsnetz 100 entnommen wird, kann zumindest ungefähr vorhergesagt werden, eine tatsächliche Entnahme kann jedoch stets von einer Prognose abweichen. Ein Wasserverteilungspunkt 130 hat n Anschlüsse für Kantenkomponenten 110 und wird auch n-Verteiler oder n-Stück genannt, wobei n üblicherweise $\geq 2$ ist. Ein T-förmiger Wasserverteilungspunkt 130 kann beispielsweise auch 3-Verteiler oder 3-Stück genannt werden.

Eine Kantenkomponente 110 kann steuerbar sein und dabei insbesondere ein Ventil 135, eine Pumpe 140 oder eine Turbine 145 umfassen, oder nicht steuerbar sein und etwa eine Rohrleitung 150 umfassen. Unter den steuerbaren Kantenkomponenten 110 gibt es üblicherweise solche, die in Abhängigkeit ihrer Ansteuerung Energie aufnehmen, insbesondere eine Pumpe 140, und solche, die nur während einer Verstellung Energie aufnehmen, etwa ein Ventil 135, oder vollständig passiv sind wie die Rohrleitung 150. Eine Pumpe 140 kann nur schaltbar sein, kann also entweder in einer ersten Betriebskonfiguration angesteuert werden, sodass sie arbeitet und Energie aufnimmt, oder sie kann in einer zweiten Betriebskonfiguration nicht angesteuert werden, sodass sie nicht arbeitet und keine Energie aufnimmt. Es kann auch eine mehrstufig oder analog in ihrer Leistung steuerbare Pumpe 140 vorgesehen sein. In diesem Fall kann die Pumpe 140 mehr als zwei Betriebskonfigurationen aufweisen. Die Leistung der Pumpe kann durch Steuerung eines insbesondere elektrischen Antriebs erfolgen oder beispielsweise über die Steuerung eines Koppelelements wie eines hydrodynamischen Drehmomentwandlers. Auch stufenlos steuerbare Pumpen 140 können durch Intervall-Vorgaben für Durchfluss und Energieaufnahme in beliebig vielen unterschiedlichen Betriebskonfigurationen modelliert und angesteuert werden.

Eine Pumpe 140 kann von einem Energieversorger 155 gespeist werden, der üblicherweise einen Anschluss oder Übergabepunkt eines Energieversorgungsnetzes umfasst. In manchen Fällen kann der Energieversorger 155 auch beispielsweise einen lokalen Generator oder einen anderen Energiewandler umfassen. Mehrere Pumpen 140 können in einer Pumpstation 160 zusammengefasst sein. Dabei können die Pumpen 140 gleichartig, also mit gleicher Pumprichtung und Pumpleistung ausgebildet sein oder es können unterschiedliche Pumpen 140 logisch oder physisch umfasst sein. Eine Turbine 145 arbeitet im Wesentlichen invers zu einer Pumpe 140, wandelt also Wasserfluss in mechanische oder elektrische Energie um. Mehrere Turbinen 145 können in einer Turbinenstation 165 zusammengefasst sein, die analog zu einer Pumpstation 160 gebildet sein kann.

Eine Steuervorrichtung 168 ist zur Bestimmung eines Steuerplans 170 bereitgestellt. Die Steuervorrichtung 168 umfasst bevorzugt eine Verarbeitungseinrichtung, die insbesondere als programmierbarer Mikrocomputer ausgeführt sein kann. Der Steuerplan 170 umfasst eine zeitliche Abfolge von Ansteuerungen wenigstens einer steuerbaren Kantenkomponente 110 des Wasserversorgungsnetzes 100, insbesondere einer Kantenkomponente 110, die in Abhängigkeit ihrer Ansteuerung Energie aufnimmt wie eine Pumpe 140. Dabei ist der Steuerplan 170 bevorzugt eine Grobplanung, legt also nicht alle Aspekte der Steuerung des Wasserversorgungsnetzes im Vorhinein fest, sondern schafft zunächst nur Rahmenbedingungen, auf deren Basis später eine Steuerung in Abhängigkeit aktueller Parameter des Wasserversorgungsnetzes 100 durchgeführt werden kann, insbesondere auf der Basis tatsächlicher Entnahmen, tatsächlicher Zuflüsse und tatsächlicher Pegelstände in Tanks 115.

Der Steuerplan 170 betrifft bevorzugt einen vorbestimmten Planungshorizont 175, der in einzelne Zeitscheiben 180 unterteilt werden kann. Der Planungshorizont 175 kann beispielsweise einen oder mehrere Tage umfassen, wobei eine Zeitscheibe 180 beispielsweise eine Stunde betragen kann. Die Zeitscheiben 180 sind bevorzugt gleich lang und füllen den Planungshorizont 175 vollständig aus. Der Planungshorizont 175 erstreckt sich stets in die Zukunft, sodass mit Anbruch einer Zeitscheibe 180 eine neue Zeitscheibe 180 in der entferntesten Zukunft innerhalb des Planungshorizonts 175 entstehen kann. Der Steuerplan 170 kann nur für die jeweils neu hinzugekommene Zeitscheibe 180 oder stets für alle Zeitscheiben 180 des Planungshorizonts 175 bestimmt werden.

Das Wasserversorgungsnetz 100 kann auf der Basis eines bestimmen Steuerplans 170 gesteuert werden. In einer Ausführungsform sind hierfür eine oder mehrere dedizierte Steuervorrichtungen vorgesehen, die insbesondere dezentral angeordnet sein können, und denen bevorzugt jeweils zumindest ein Teil des bestimmten Steuerplans bereitgestellt wird. In einer anderen Ausführungsform umfasst die Steuervorrichtung 168 eine Schnittstelle 185 zur Verbindung mit wenigstens einer der steuerbaren Kantenkomponenten 110 und ist dazu eingerichtet, über die Schnittstelle 185 ein passendes Steuersignal an die Kantenkomponente 110 bereitzustellen.

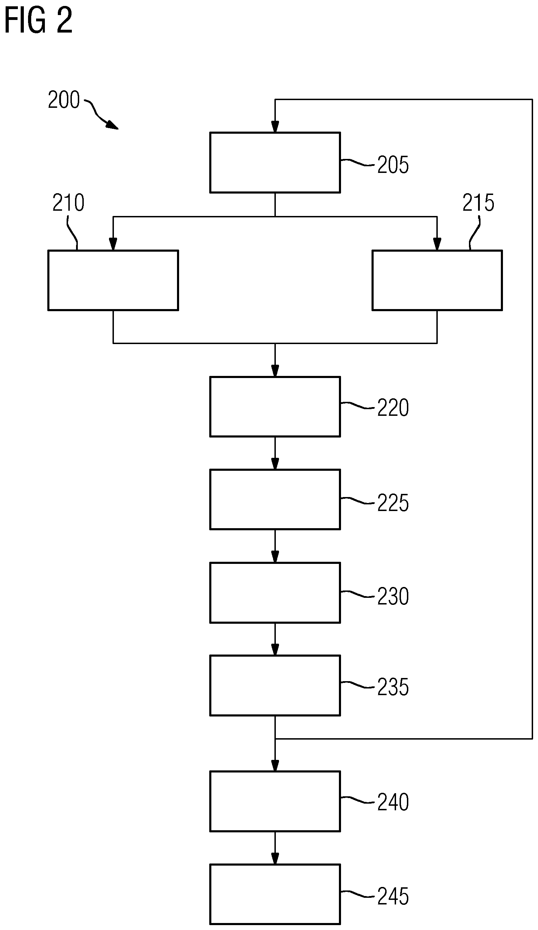

Figur 2 zeigt ein Ablaufdiagramm eines Verfahrens 200 zum Steuern eines Wasserversorgungsnetzes 100 wie dem von Figur 1. Einzelne Schritte des Verfahrens 200 können in einer anderen als der angegebenen Reihenfolge durchgeführt werden. Das Verfahren 200 kann insbesondere, ganz oder in Teilen, auf der Steuervorrichtung 168 ausgeführt werden. Dazu kann die Steuervorrichtung 168 einen programmierbaren Mikrocomputer oder Mikrocontroller umfassen und das Verfahren 200 kann zumindest teilweise in Form eines Computerprogrammprodukts mit Programmcodemitteln vorliegen. Das Verfahren 200 ist eng mit der Steuervorrichtung 168 verbunden, sodass Merkmale oder Vorteile vom Verfahren 200 auf die Vorrichtung 168 übertragen werden können oder umgekehrt.

In einem Schritt 205 werden bevorzugt der Planungshorizont 175 und die Zeitscheiben 180 bestimmt. Diese Bestimmung kann bei nachfolgenden Durchläufen des Verfahrens 200 wiederholt oder das zuvor bestimmte Ergebnis übernommen werden.

In einem Schritt 210 werden bevorzugt Einspeisegrenzen der Wassereinspeiser 120 bestimmt. Dabei können insbesondere eine obere und eine untere Grenze bestimmt werden, entweder für alle Wassereinspeiser 120 oder für eine Gruppe oder einen einzelnen Wassereinspeiser 120. Parallel dazu werden bevorzugt Entnahmen durch Wasserverbraucher 125 bestimmt bzw. vorhergesagt. Die Vorhersage kann insbesondere auf der Basis historischer Werte oder Parametern wie einer erwarteten Temperatur oder bestimmt werden. Die Bestimmungen der Schritte 210 und 215 werden bevorzugt für jede der Zeitscheiben 180 durchgeführt.

In einem Schritt 220 können mögliche Betriebskonfigurationen bestimmt werden. Dabei umfasst eine Betriebskonfiguration bevorzugt die Konfiguration einer Kantenkomponente 110 des Wasserversorgungsnetzes 100. Die Konfiguration kann insbesondere einen Aktivierungszustand einer steuerbaren Kantenkomponente 110 umfassen und ferner eine Energieaufnahme der Kantenkomponente 110 oder einen Durchfluss durch die Kantenkomponente 110. Die Gesamtheit aller möglichen Betriebskonfigurationen aller Knotenkomponenten 110 kann den Aufbau oder die Architektur des Wasserversorgungsnetzes 100 logisch reflektieren.

In einem Schritt 225 können Energiekosten bestimmt werden. Diese können abhängig von einem Zeitpunkt sein, sodass sie für die Zeitscheiben 180 einzeln bestimmt werden können. Optional können Energiekosten auch von unterschiedlichen Anbietern bestimmt werden, sodass später ein günstiger Anbieter ausgewählt werden kann. Die Energiekosten sind relevant für die Energie, die beispielsweise durch eine Pumpe 140 aufgenommen wird, wenn sie angesteuert bzw. aktiviert wird, um Wasser zwischen Knoteneinrichtungen 105 des Wasserversortungsnetzes 100 zu fördern.

In einem Schritt 227 können Zustände von Knotenkomponenten 105 je Zeitscheibe bestimmt werden. Die Knotenkomponenten 105 können insbesondere einen Tank 105 umfassen und der Zustand des Tanks kann Zulässigkeitsschranken an seinen Füll- oder Pegelstand betreffen, z. B. maximales Behältervolumen bzw. Mindestfüllstand.

In einem Schritt 230 können Anfangszustände von Komponenten des Wasserversorgungsnetzes 100 bestimmt werden. Dadurch kann ein Betriebszustand des Wasserversorgungsnetzes 100 reflektiert werden. Die Anfangszustände können beispielsweise Ansteuerungen von Komponenten, Stellungen von Ventilen oder Pegelstände von Tanks 115 umfassen.

Die Schritte 205 bis 230 betreffen im Wesentlichen das Bestimmen von Informationen, die für die tatsächliche Bereitstellung eines Steuerplans 170 erforderlich sind. Prinzipiell können die Schritte 205 bis 230 auch parallel oder in einer beliebigen Reihenfolge durchgeführt werden.

Auf der Basis der gesammelten Informationen kann in einem Schritt 235 der Steuerplan 170 bestimmt werden. Bevorzugt umfasst der Steuerplan 170 alle zuvor festgelegten Zeitscheiben 180. Die konkrete Bestimmung des Steuerplans 170 erfolgt bevorzugt als Optimierung innerhalb eines Suchraums, der durch die oben beschriebenen Einschränkungen vorgegeben ist. Die Optimierung kann insbesondere mittels eines gemischt ganzzahligen Programms durchgeführt werden, wie unten noch genauer ausgeführt wird.

In einem Schritt 240 kann der bestimmte Steuerplan 170 bereitgestellt werden, beispielsweise indem er in Teilen oder vollständig an eine Steuervorrichtung zur Steuerung des Wasserversorgungsnetzes 100 weitergeleitet wird. Alternativ kann der Steuerplan 170 auch zur Kontrolle oder als Referenz an eine Person ausgegeben werden, beispielsweise in numerischer oder graphischer Form.

In einem Schritt 245 kann der Steuerplan 170, insbesondere im Rahmen einer aktuellen Zeitscheibe 180, durchgeführt werden, indem das Wasserversorgungsnetz auf der Basis des Steuerplans 170 gesteuert wird. Die Steuerung kann mittels der Vorrichtung 165 oder einer anderen Vorrichtung erfolgen. Parallel dazu kann eine weitere Grobplanung erfolgen, indem das Verfahren 200 erneut durchlaufen wird.

Im Folgenden wird eine Ausführungsform des Verfahrens 200 zum Steuern eines Wasserversorgungsnetzes genauer ausgeführt. Dabei wird eine mathematische Notation verwendet, die insbesondere zur Durchführung mittels eines gemischt ganzzahligen Programms geeignet ist, welches beispielsweise mit Hilfe eines kommerziellen Solvers wie z. B. Scip, CPLEX oder Gurobi gelöst werden kann, um als Planungsresultat optimierte Werte für die Variablen des Modells zu erhalten. Gemischtganzzahlige lineare Programme lassen sich leicht erweitern und anpassen, beispielsweise durch zusätzliche Nebenbedingungen.

**Bezeichnungen**

Für die Definition des mathematischen Modells führen wir nachfolgende Bezeichnungen ein.

**Mengen** (Bezeichner: lateinische Großbuchstaben)

$T = \{t_1, t_2, ..., t_n\}$ Menge der überschneidungsfreien und unmittelbar aneinander angrenzenden Zeitscheiben, in die der Planungshorizont aufgeteilt ist; die Indizes entsprechen der zugehörigen zeitlichen Sortierung dieser Zeitscheiben, d. h. $t_1$ bezeichnet die erste Zeitscheibe, $t_n$ die letzte.

$V$ Menge der Knotenkomponenten $v$ im Wassernetzwerk (d. h. Menge aller Tanks, Wassereinspeiser, Wasserverbraucher, Wasserverteilungspunkte etc.)

$E$ Menge der Kantenkomponenten $e$ im Wassernetzwerk (d. h. Menge aller Pumpen, Ventile, Rohrleitungen etc.)

$E_v^+$ Menge aller in die Knotenkomponente $v$ eingehenden Kantenkomponenten $e$, d. h. bei positivem Fluss durch die Kantenkomponente $e$ fließt das Wasser in die Knotenkomponente $v$ hinein

$E_v^-$ Menge aller aus der Knotenkomponente $v$ ausgehenden Kantenkomponenten $e$, d. h. bei positivem Fluss durch die Kante $e$ fließt das Wasser aus dem Knoten $v$ heraus

$E_v$ Menge aller mit der Knotenkomponente $v$ inzidenten Kantenkomponenten, d. h. $E_v = E_v^+ \cup E_v^-$

$C_e$ Menge aller technischen Konfigurationen $c$, in denen die Kantenkomponente $e$ betrieben werden kann. Eine Konfiguration legt dabei eine untere und eine obere Schranke für die zulässigen Flussraten fest (vgl. unten eingeführte Parameter $\phi_{e,c}^{min}$ und $\phi_{e,c}^{max}$)

**Parameter** (Bezeichner: griechische Klein- und Großbuchstaben)

$\tau_t$ Dauer der Zeitscheibe $t$ (gemessen in s)

$\theta_t^{-1}$ Zeitscheibe, die der Zeitscheibe $t$ unmittelbar vorangeht $(t \in T \setminus \{t_1\})$, d. h. $\theta_{t_2}^{-1} = t_1$

$\sigma_{v,t}^{min}$ Minimal zulässiges gespeichertes Wasservolumen (gemessen z. B. in m³) in der Knotenkomponente $v$ während der Zeitscheibe $t$ und insbesondere auch zum Ende der Zeitscheibe $t$; für alle Knotenkomponenten, die keine Tanks sind, gilt stets $\sigma_{v,t}^{min} = 0$

$\sigma_{v,t}^{max}$ Maximal zulässiges gespeichertes Wasservolumen (gemessen z. B. in m³) in der Knotenkomponente $v$ während der Zeitscheibe $t$ und insbesondere auch zum Ende der Zeitscheibe $t$; für alle Knotenkomponenten, die keine Tanks sind, gilt stets $\sigma_{v,t}^{max} = 0$

$\sigma_v^{ini}$ Initial (d. h. zum Beginn des Planungshorizonts) gespeichertes Wasservolumen (gemessen z. B. in m³) in der Knotenkomponente $v$; für alle Knotenkomponenten, die keine Tanks sind, gilt stets $\sigma_v^{ini} = 0$

$\rho_{v,t}^{min}$ Minimale Wasser-Verbrauchsrate (gemessen z. B. in m³/s) für die Knotenkomponente $v$ während der Zeitscheibe $t$. Für Wasserverbraucher ist dieser Wert stets positiv, für Wassereinspeiser dagegen negativ. Bei negativen Werten dreht sich die Logik von "min" und "max" um. Für Tanks und Wasserverteilungspunkte gilt stets $\rho_{v,t}^{min} = 0$

$\rho_{v,t}^{max}$ Maximale Wasser-Verbrauchsrate (gemessen z. B. in m³/s) für die Knotenkomponente $v$ während der Zeitscheibe $t$ (für Wasserverbraucher ist dieser Wert stets positiv, für Wassereinspeiser dagegen negativ. Bei negativen Werten dreht sich die Logik von "min" und "max" um. Für Tanks und Wasserverteilungspunkte gilt stets $\rho_{v,t}^{max} = 0$

$\kappa_e^{ini}$ Initiale Betriebskonfiguration der Kantenkomponente $e$

$\phi_{e,c}^{min}$ Minimale Wasser-Flussrate (gemessen z. B. in m³/s) durch die Kantenkomponente $e$ in der Betriebskonfiguration $c$ (negative Werte kennzeichnen hier einen Wasserfluss entgegen der Orientierung der Kanten-Orientierung; will man dies vermeiden, so muss $\phi_{e,c}^{min}$ folglich nichtnegativ gewählt werden)

$\phi_{e,c}^{max}$ Maximale Wasser-Flussrate (gemessen z. B. in m³/s) durch die Kantenkomponente $e$ in der Betriebskonfiguration $c$

$\omega_e^{sw}$ Kostensatz pro Schaltung der Kantenkomponente $e$ ($\neq 0$ nur für Pumpen)

$\omega_{e,t}^{en}$ Kostensatz pro kWh Energie, die beim Betrieb der Kantenkomponente $e$ während der Zeitscheibe $t$ verbraucht wird

$\pi_{e,c}^{min}$ Minimale elektrische Leistung (gemessen in kW) der Kantenkomponente $e$ in der Betriebskonfiguration $c$, die zusammen mit der minimalen Flussrate $\phi_{e,c}^{min}$ anfällt; für Ventile und Rohre gilt stets $\pi_{e,c}^{min} = 0$

$\pi_{e,c}^{max}$ Maximale elektrische Leistung (gemessen in kW) der Kantenkomponente $e$ in der Betriebskonfiguration $c$, die zusammen mit der maximalen Flussrate $\phi_{e,c}^{max}$ anfällt; für Ventile und Rohre gilt stets $\pi_{e,c}^{max} = 0$

**Variablen** (Bezeichner: lateinische Kleinbuchstaben)

$0 \leq d_{e,t,c}^1 \leq \tau_t$ Variable für die Dauer (gemessen in s), in der die Kantenkomponente $e$ vor dem potentiellen Schaltvorgang der Komponente in Zeitscheibe *t* in der Zustands-Konfiguration *c* betrieben wird ($e \in E, t \in T, c \in C_e$)

$$0 \leq d^2_{e,t,c} \leq \tau_t$$ Variable für die Dauer (gemessen in s), in der die Kantenkomponente *e* nach dem potentiellen Schaltvorgang der Komponente in Zeitscheibe *t* in der Zustands-Konfiguration *c* betrieben wird ($e \in E, t \in T, c \in C_e$)

$0 \leq s_t \leq \tau_t$ Variable für den potentiellen Schaltzeitpunkt (gemessen in s) der Kantenkomponenten während der Zeitscheibe *t* (*t* ∈ *T*). Da die Schaltungen für alle mit einer Knotenkomponente *v* inzidenten Kantenkomponenten zeitgleich erfolgen müssen und wir ohne Einschränkung der Allgemeinheit nur zusammenhängende Wassernetzwerke betrachten, ist der potentielle Schaltzeitpunkt für alle Kantenkomponenten stets derselbe. Die Variable ist daher nicht von *e* abhängig

$f^1_{e,t,c}$ Variable für den Wasserfluss (gemessen z. B. in m³) durch die Kantenkomponente *e* vor dem potentiellen Schaltvorgang der Komponente in Zeitscheibe *t* in der Betriebszustands-Konfiguration *c* ($e \in E, t \in T, c \in C_e$)

$f^2_{e,t,c}$ Variable für den Wasserfluss (gemessen z. B. in m³) durch die Kantenkomponente *e* nach einem möglichen Schaltvorgang der Komponente in Zeitscheibe *t* in der Betriebszustands-Konfiguration *c* ($e \in E, t \in T, c \in C_e$)

$g^1_{e,t,c}$ Variable für den Energieverbrauch (gemessen in kWh) der Kantenkomponente *e* vor einem möglichen Schaltvorgang der Komponente in Zeitscheibe *t* in der Betriebszustands-Konfiguration *c* ($e \in E, t \in T, c \in C_e$); der Energieverbrauch $g^1_{e,t,c}$ ist dabei mit dem zugehörigen Wasserfluss $f^1_{e,t,c}$ korreliert

$g^2_{e,t,c}$ Variable für den Energieverbrauch (gemessen in kWh) der Kantenkomponente *e* nach dem potentiellen Schaltvorgang der Komponente in Zeitscheibe *t* in der Betriebszustands-Konfiguration *c* ($e \in E, t \in T, c \in C_e$); der Energieverbrauch $g^2_{e,t,c}$ ist dabei mit dem zugehörigen Wasserfluss $f^2_{e,t,c}$ korreliert

$k^1_{e,t,c} \in \{0,1\}$ Binär-Variable für die Entscheidung, in welcher Zustands-Konfiguration *c* die Kantenkomponente *e* vor dem potentiellen Schaltvorgang der Komponente in Zeitscheibe *t* betrieben wird ($e \in E, t \in T, c \in C_e$); im Fall $k^1_{e,t,c} = 1$ ist vor dem potentiellen Schaltvorgang die Konfiguration *c* aktiv, ansonsten eine andere Konfiguration *c' ≠ c*

$k^2_{e,t,c} \in \{0,1\}$ Binär-Variable für die Entscheidung, in welcher Zustands-Konfiguration *c* die Kantenkomponente *e* nach dem potentiellen Schaltvorgang der Komponente in Zeitscheibe *t* betrieben wird ($e \in E, t \in T, c \in C_e$); im Fall $k^2_{e,t,c} = 1$ 1 ist nach dem potentiellen Schaltvorgang die Konfiguration *c* aktiv, ansonsten eine andere Konfiguration *c' ≠ c*

$0 \leq m_{e,t} \leq 1$ Indikator-Variable, die anzeigt, ob es während der Zeitscheibe *t* bei der Kantenkomponente *e* zu einem Schaltvorgang kam oder nicht ($e \in E, t \in T$). Wenn ja, nimmt die Variable aufgrund der Nebenbedingungen automatisch den Wert 1 an, wenn nein den Wert 0. Man muss die Variable also nicht explizit als binär deklarieren

$0 \leq n_{e,t} \leq 1$ Indikator-Variable, die anzeigt, ob es beim Zeitscheibenübergang von der vorangegangenen Zeitscheibe $\theta^{-1}_t$ zur Zeitscheibe *t* bei der Kantenkomponente *e* zu einem Schaltvorgang kam oder nicht ($e \in E, t \in T \setminus \{t_1\}$). Wenn ja, nimmt die Variable aufgrund der Nebenbedingungen automatisch den Wert 1 an, wenn nein den Wert 0. Man muss die Variable also nicht explizit als binär deklarieren

$u^1_{v,t}$ Variable für den Wasserverbrauch (gemessen z. B. in m³) in der Knotenkomponente *v* vor dem potentiellen Schaltzeitpunkt während der Zeitscheibe *t* (*v* ∈ *V*, *t* ∈ *T*); ein negativer Wert für $u^1_{v,t}$ entspricht somit de facto einer Wassereinspeisung.

$u^2_{v,t}$ Variable für den Wasserverbrauch (gemessen z. B. in m³) in der Knotenkomponente *v* nach dem potentiellen Schaltzeitpunkt während der Zeitscheibe *t* (*v* ∈ *V*, *t* ∈ *T*); ein negativer Wert für $u^2_{v,t}$ entspricht somit de facto einer Wassereinspeisung.

$w_{v,t}^{end}$       Variable für das gespeicherte Wasservolumen (gemessen z. B. in m³) in der Knotenkomponente $v$ zum Ende der Zeitscheibe $t (v \in V, t \in T)$

$w_{v,t}^{s}$       Variable für das gespeicherte Wasservolumen (gemessen z. B. in m³) in der Knotenkomponente $v$ zum Zeitpunkt des potentiellen Schaltzeitpunkts während der Zeitscheibe $t (v \in V, t \in T)$

**Mathematisches Modell in Form eines gemischt-ganzzahligen linearen Programms**

Im Folgenden werden die Nebenbedingungen und die Zielfunktion eines gemischt-ganzzahligen linearen Programms schrittweise eingeführt. Hierfür werden zunächst jeweils die erforderlichen mathematischen Formeln definiert, eine Erläuterung der zugehörigen Logik zum besseren Verständnis erfolgt im Anschluss.

Mit den eingeführten Formeln und unter Berücksichtigung von Wertebereichen der Variablen ergibt sich das folgende Minimierungsproblem:

$$\text{Minimiere} \quad (25) + (26)$$

unter den Nebenbedingungen (1), (2), ..., (24)

In dieser Aussage numerisch referenzierte Gleichungen werden im Folgenden genauer beschrieben oder hergeleitet.

**Nebenbedingungen**

In diesem Abschnitt werden die Nebenbedingungen des gemischt-ganzzahligen Programms eingeführt, die den zulässigen Suchraum für das Planungsproblem definieren. Nicht alle angegebenen Nebenbedingungen müssen in allen Ausführungsformen des Verfahrens erfüllt sein und es können auch andere oder zusätzliche Nebenbedingungen gelten.

$$(1) \quad \sigma_{v,t}^{min} \leq w_{v,t}^{end} \leq \sigma_{v,t}^{max} \qquad (v \in V, t \in T)$$

Nebenbedingung (1) definiert für alle Endzeitpunkte der Zeitscheiben t eine untere und eine obere Schranke für die in der Knotenkomponente $v$ gespeicherte Wassermenge. Da für alle Knotenkomponenten außer den Tanks gilt $\sigma_{v,t}^{min} = \sigma_{v,t}^{max} = 0$, sorgt die Bedingung (1) dafür, dass nur in Tanks tatsächlich Wasser gespeichert werden kann. Für Tanks entspricht eine untere Schranke in der Regel einem Mindest- oder Sicherheitsfüllstand und eine obere Schranke einem physikalischen Fassungsvermögen.

$$(2) \quad \sigma_{v,t}^{min} \leq w_{v,t}^{s} \leq \sigma_{v,t}^{max} \qquad (v \in V, t \in T)$$

Nebenbedingung (2) definiert analog zu (1) für alle potentiellen Schaltzeitpunkte der Kantenkomponenten innerhalb aller Zeitscheiben $t$ eine untere und eine obere Schranke für die in der Knotenkomponente $v$ gespeicherte Wassermenge. Diese Schranken entsprechen in unserem Modell ohne Beschränkung der Allgemeinheit denen für die Endzeitpunkte.

$$(3) \quad \rho_{v,t}^{min} \cdot s_t \leq u_{v,t}^{1} \leq \rho_{v,t}^{max} \cdot s_t \qquad (v \in V, t \in T)$$

Nebenbedingung (3) definiert für alle Zeitscheiben $t$ und alle Knotenkomponenten $v$ eine untere und eine obere Schranke für den vom Zeitschrittbeginn bis zum potentiellen Schaltzeitpunkt der Kantenkomponenten gemittelten Wasserverbrauch in diesem Knoten. Der Wasserverbrauch wird auf der Basis eines Produkts von Rate und Dauer beispielsweise in Kubikmetern gemessen. Für Tanks und N-Stücke kann der Wasserverbrauch durch die Parameter-Vorgaben auf null fixiert werden. Für Endverbraucher können die oberen und unteren Schranken auf die jeweils prognostizierten Wasserverbrauchsraten in dem jeweiligen Zeitschritt fixiert werden. Lediglich bei den Einspeisern können sich somit echte Intervall-Bedingungen ergeben, die die minimale und die maximale Wasserabgabemenge einer Wasserquelle

reflektieren.

$$(4) \quad \rho_{v,t}^{min} \cdot (\tau_t - s_t) \leq u_{v,t}^2 \leq \rho_{v,t}^{max} \cdot (\tau_t - s_t) \qquad (v \in V, t \in T)$$

Nebenbedingung (4) definiert analog zu (3) für alle Zeitscheiben *t* und alle Knotenkomponenten *v* eine untere und eine obere Schranke für den ab dem potentiellen Schaltzeitpunkt der Kantenkomponenten bis zum Zeitschrittende gemittelten Wasserverbrauch in diesem Knoten.

$$(5) \quad \phi_{e,c}^{min} \cdot d_{e,t,c}^1 \leq f_{e,t,c}^1 \leq \phi_{e,c}^{max} \cdot d_{e,t,c}^1 \qquad (e \in E, t \in T, c \in C_e)$$

Nebenbedingung (5) definiert für alle Zeitscheiben *t*, jede Kantenkomponente *e* und jede zugehörige Betriebskonfiguration *c* eine untere und obere Schranke für den jeweiligen vom Zeitschrittbeginn bis zum potentiellen Schaltzeitpunkt der Kantenkomponenten innerhalb des Zeitschritts gemittelten Wasserfluss durch *e*. Der Wasserfluss wird auf der Basis eines Produkts von Rate und Dauer beispielsweise in Kubikmetern gemessen. Sind Pumpen z. B. ausgeschaltet (Betriebszustand "Pumpe aus"), so wird der Durchfluss für diese Konfiguration mithilfe der Schrankenparameter bevorzugt auf null fixiert.

$$(6) \quad \phi_{e,c}^{min} \cdot d_{e,t,c}^2 \leq f_{e,t,c}^2 \leq \phi_{e,c}^{max} \cdot d_{e,t,c}^2 \qquad (e \in E, t \in T, c \in C_e)$$

Nebenbedingung (6) definiert analog zu (5) für alle Zeitscheiben *t*, jede Kantenkomponente *e* und jede zugehörige Betriebskonfiguration *c* eine untere und eine obere Schranke für den jeweiligen, ab dem potentiellen Schaltzeitpunkt der Kantenkomponenten bis zum Zeitschrittende gemittelten Wasserfluss durch *e*.

$$(7) \quad w_{v,t_1}^s = \sigma_v^{ini} - u_{v,t_1}^1 + \sum_{e \in E_v^+} \sum_{c \in C_e} f_{e,t_1,c}^1 - \sum_{e \in E_v^-} \sum_{c \in C_e} f_{e,t_1,c}^1 \qquad (v \in V)$$

Nebenbedingung (7) beschreibt die Wasserbilanzgleichung für alle Knotenkomponenten *v* vom Start des Planungshorizonts (erster Zeitschritt) bis zum ersten potentiellen Schaltzeitpunkt, der üblicherweise innerhalb der ersten Zeitscheibe liegt. Das in *v* gespeicherte Wasservolumen zu diesem ersten potentiellen Schaltzeitpunkt ergibt sich aus dem Anfangsvolumen $\sigma_v^{ini}$, das um die Durchflussmengen durch die in *v* eingehenden Kantenkomponenten bis zu diesem Zeitpunkt vergrößert und um den Wasserverbrauch des Knotens und die Durchflussmengen durch die aus *v* ausgehenden Kantenkomponenten bis zu diesem Zeitpunkt verringert wird. Zu beachten ist dabei, dass der Wasserverbrauch auch negativ sein kann, beispielsweise bei einem Einspeiser. Das Gleiche gilt unter Umständen auch für den Wasserfluss durch die Kantenkomponenten. Das jeweilige Vorzeichen sorgt dafür, dass die zugehörigen Wassermengen korrekt zur Wasser-Bilanz-Gleichung beitragen. Im Hinblick auf den Wasserfluss durch die Kantenkomponenten sei zusätzlich angemerkt, dass durch die Nebenbedingungen (10), (13) und (5) dafür gesorgt werden kann, dass es bei der Summierung über alle Betriebszustände jeweils nur höchstens einen Summanden ungleich null geben kann, da sich jede Kantenkomponente bis zum ersten Schaltzeitpunkt nur in einem einzigen Betriebszustand befinden kann.

$$(8) \quad w_{v,t}^{end} = w_{v,t}^s - u_{v,t}^2 + \sum_{e \in E_v^+} \sum_{c \in C_e} f_{e,t,c}^2 - \sum_{e \in E_v^-} \sum_{c \in C_e} f_{e,t,c}^2 \qquad (v \in V, t \in T)$$

Nebenbedingung (8) besitzt die gleich Bilanzierungs-Logik wie Nebenbedingung (7). Sie beschreibt dabei jedoch für alle Knotenkomponenten *v* und alle Zeitscheiben *t* den Übergang des in *v* gespeicherten Wasservolumens vom Zeitpunkt des potentiellen Schaltzeitpunkts innerhalb der Zeitscheibe bis zum Ende der zugehörigen Zeitscheibe.

$$(9) \quad w_{v,t}^s = w_{v,\theta_t^{-1}}^{end} - u_{v,t}^1 + \sum_{e \in E_v^+} \sum_{c \in C_e} f_{e,t,c}^1 - \sum_{e \in E_v^-} \sum_{c \in C_e} f_{e,t,c}^1 \qquad (v \in V, t \in T \backslash \{t_1\})$$

Nebenbedingung (9) besitzt die ebenfalls die gleiche Bilanzierungs-Logik wie Nebenbedingung (7). Sie beschreibt dabei jedoch für alle Knotenkomponenten *v* und alle Zeitscheiben *t* mit Ausnahme der ersten Zeitscheibe den Übergang des in *v* gespeicherten Wasservolumens vom Endzeitpunkt der Vorgänger-Zeitscheibe $\theta_t^{-1}$ bis zum potentiellen Schaltzeitpunkt der Nachfolger-Zeitscheibe *t*.

$$(10) \quad k_{e,t,\kappa_e^{ini}}^1 = 1 \qquad\qquad (e \in E)$$

Nebenbedingung (10) fixiert für alle Kantenkomponenten *e* die Betriebskonfiguration zu Beginn der ersten Zeitscheibe auf den initialen Betriebszustand $\kappa_e^{ini}$.

$$(11) \quad \sum_{c \in C_e} k_{e,t,c}^1 = 1 \qquad\qquad (e \in E, t \in T)$$

Da es sich bei den Variablen $k_{e,t,c}^1$ um Binärvariablen handelt, die nur den Wert 0 oder 1 annehmen können, besagt Nebenbedingung (11), dass es stets genau eine eindeutig festgelegte Betriebs-Konfiguration *c* für jede Kantenkomponente *e* geben muss, die vom jeweiligen Beginn einer Zeitscheibe *t* bis zum zugehörigen potentiellen Schaltzeitpunkt innerhalb der Zeitscheibe aktiv ist. Alle anderen möglichen Betriebs-Konfigurationen der Kantenkomponente *e* bleiben somit in diesem Zeitraum inaktiv.

$$(12) \quad \sum_{c \in C_e} k_{e,t,c}^2 = 1 \qquad\qquad (e \in E, t \in T)$$

Nebenbedingung (12) ist analog zu Nebenbedingung (11), behandelt dabei aber jeweils den Zeitabschnitt vom potentiellen Schaltzeitpunkt bis zum Ende der jeweiligen Zeitscheibe. Zusammen mit (11) besagt (12) somit, dass in jeder Zeitscheibe höchstens zwei Betriebs-Konfigurationen aktiv sein können, nämlich je eine vor und eine nach dem potentiellen Schaltzeitpunkt. Handelt es sich dabei um dieselbe Konfiguration, so kann effektiv nicht geschaltet werden und es gibt nur eine aktive Konfiguration in dieser Zeitscheibe.

$$(13) \quad d_{e,t,c}^1 \le \tau_t \cdot k_{e,t,c}^1 \qquad\qquad (e \in E, t \in T, c \in C_e)$$

Nebenbedingung (13) stellt für den ersten Teilabschnitt jeder Zeitscheibe *t*, also den Zeitabschnitt vom Start bis zum potentiellen Schaltzeitpunkt der aktuellen Zeitscheibe *t*, eine obere Schranke für die Dauer dar, über die sich die Kantenkomponenten *e* in der Betriebskonfiguration *c* befindet. Ist die Konfiguration *c* in diesem Zeitabschnitt nicht aktiv (also $k_{e,t,c}^1 = 0$), so ist diese Dauer automatisch auf 0 fixiert. Ist sie aktiv, so kann sie maximal die Länge der Zeitscheibe *t* betragen. Da aufgrund von (11) nur eine Konfiguration aktiv ist, kann somit auch höchstens einer Konfiguration eine positive Dauer zugeordnet werden.

$$(14) \quad d_{e,t,c}^2 \le \tau_t \cdot k_{e,t,c}^2 \qquad\qquad (e \in E, t \in T, c \in C_e)$$

Nebenbedingung (14) ist analog zu Nebenbedingung (13) formuliert und behandelt dabei aber den jeweils zweiten Abschnitt jeder Zeitscheibe *t*, also den vom potentiellen Schaltzeitpunkt bis zum Ende der Zeitscheibe.

$$(15) \quad \sum_{c \in C_e} (d_{e,t,c}^1 + d_{e,t,c}^2) = \tau_t \qquad\qquad (e \in E, t \in T)$$

Nebenbedingung (15) stellt für alle Kantenkomponenten *e* und alle Zeitscheiben *t* sicher, dass sich die beiden Dauern der aktiven Betriebs-Konfigurationen der Kantenkomponente *e* für die Zeitabschnitte vor und nach dem potentiellen Schaltzeitpunkt jeweils auf die Gesamtdauer der Zeitscheibe addieren, sodass gewährleistet ist, dass zu jedem Zeitpunkt im Planungshorizont genau eine Betriebs-Konfiguration aktiv ist.

$$(16) \quad s_t = \sum_{c \in C_e} d^1_{e,t,c} \qquad\qquad (t \in T)$$

Nebenbedingung (16) dient der Ermittlung des potentiellen Schaltzeitpunks für jede Zeitscheibe $t$. Aufgrund von (10) und (13) kann nur ein einziger der Summanden ungleich 0 sein. Die zu diesem Summanden gehörende Dauer für die Aktivzeit der entsprechenden Betriebs-Konfiguration entspricht dem Schaltzeitpunkt innerhalb der Zeitscheibe, gemessen seit dem Beginn der Zeitscheibe.

$$(17) \quad m_{e,t} \geq k^1_{e,t,c} - k^2_{e,t,c} \qquad\qquad (e \in E, t \in T, c \in C_e)$$

$$(18) \quad m_{e,t} \geq k^2_{e,t,c} - k^1_{e,t,c} \qquad\qquad (e \in E, t \in T, c \in C_e)$$

Die Nebenbedingungen (17) und (18) stellen in Kombination eine untere Schranke für die Anzahl an Schaltungen innerhalb einer Zeitscheibe dar, d. h. es wird überprüft, ob für die Kantenkomponente $e$ beim potentiellen Schaltzeitpunkt innerhalb der Zeitscheibe $t$ tatsächlich eine Schaltung stattfand oder nicht. Fand keine Schaltung statt, so haben die Variablen $k^1_{e,t,c}$ und $k^2_{e,t,c}$ für alle Betriebs-Konfigurationen $c$ denselben Wert und die untere Schranke besitzt den Wert 0. Fand hingegen eine Schaltung statt, so unterscheiden sich die Werte für die Variablen $k^1_{e,t,c}$ und $k^2_{e,t,c}$ genau für die beiden aktiven Betriebskonfigurationen. Die beiden Differenzen auf den rechten Seiten der Ungleichungen (17) und (18) betragen dann also 1 und -1, sodass sich insgesamt die untere Schranke 1 ergibt. Da in der Zielfunktion eine Schaltung mit Kosten belegt werden können, die dann zu minimieren sind, werden die Werte der Variablen $m_{e,t}$ in der berechneten Lösung bevorzugt stets minimal gewählt, d. h. identisch mit der zugehörigen unteren Schranke. Somit ergibt sich aus der Optimierung, dass die Variablen $m_{e,t}$ in der Optimallösung stets den Wert 0 oder den Wert 1 annehmen, ohne explizit als binär deklariert worden zu sein.

$$(19) \quad n_{e,t} \geq k^1_{e,t,c} - k^2_{e,\theta_t^{-1},c} \qquad\qquad (e \in E, t \in T \backslash \{t_1\}, c \in C_e)$$

$$(20) \quad n_{e,t} \geq k^2_{e,\theta_t^{-1},c} - k^1_{e,t,c} \qquad\qquad (e \in E, t \in T \backslash \{t_1\}, c \in C_e)$$

Das Nebenbedingungspaar (19) und (20) besitzt dieselbe Logik wie das Nebenbedingungspaar (17) und (18). Der Unterschied liegt lediglich darin, dass hier nicht die Schaltungen innerhalb der Zeitscheiben überprüft werden, sondern die beim Übergang von der Vorgänger-Zeitscheibe zu ihrer Nachfolger-Zeitscheibe. Da ein unmittelbares Umschalten der initialen Betriebs-Konfiguration zum Zeitpunkt 0 üblicherweise nicht vorgesehen ist (höchstens als Schaltung "innerhalb" der Zeitscheibe), wird die erste Zeitscheibe bei den Nebenbedingungen (19) und (20) jeweils ausgeklammert.

$$(21) \quad g^1_{e,t,c} = \pi^{min}_{e,c} \cdot d^1_{e,t,c} \cdot \frac{1}{3600} \cdot \frac{h}{s} \qquad\qquad (e \in E, t \in T, c \in C_e : \phi^{min}_{e,c} = \phi^{max}_{e,c})$$

Nebenbedingung (21) definiert für jede Zeitscheibe $t$ den Energieverbrauch bis zum potentiellen Schaltzeitpunkt, der mit dem Betrieb der Kantenkomponente $e$ in der Betriebs-Konfiguration $c$ einhergeht, falls $c$ einen eindeutigen Betriebspunkt, insbesondere hinsichtlich einer Flussrate und somit auch hinsichtlich einer Leistung, vorschreibt. Dieser errechnet sich aus dem Produkt der zu $c$ gehörenden Leistung und der Aktivitäts-Dauer dieser Betriebs-Konfiguration. Zu beachten ist darüber hinaus, dass die Zeiteinheit von Sekunden in Stunden umgerechnet werden muss, um die Energie in kWh anzugeben.

$$(22) \quad g_{e,t,c}^1 = \left( \pi_{e,c}^{min} \cdot d_{e,t,c}^1 + \frac{\pi_{e,c}^{max} - \pi_{e,c}^{min}}{\phi_{e,c}^{max} - \phi_{e,c}^{min}} \cdot (f_{e,t,c}^1 - \phi_{e,c}^{min} \cdot d_{e,t,c}^1) \right) \cdot$$
$$\cdot \frac{1}{3600} \cdot \frac{h}{s} \quad (e \in E, t \in T, c \in C_e : \phi_{e,c}^{min} \neq \phi_{e,c}^{max})$$

Nebenbedingung (22) definiert für jede Zeitscheibe $t$ den Energieverbrauch bis zum potentiellen Schaltzeitpunkt, der mit dem Betrieb der Kantenkomponente $e$ in der Betriebs-Konfiguration $c$ einhergeht, falls $c$ statt eines eindeutigen Betriebspunkts ein echtes Intervall von möglichen Betriebspunkten, insbesondere hinsichtlich einer Flussrate und somit auch hinsichtlich einer Leistung, vorschreibt.

Die Idee hinter der Gleichung besteht darin, dass für die zur gewählten Flussrate $f_{e,t,c}^1$ passende Leistung angenommen wird, dass sie dieselbe relative Position innerhalb des Leistungsintervalls $[\pi_{e,c}^{min}, \pi_{e,c}^{max}]$ einnimmt wie die zu $f_{e,t,c}^1$ gehörende Flussrate im Flussraten-Intervall $[\phi_{e,c}^{min}, \phi_{e,c}^{max}]$. Liegt also die entsprechende Flussrate genau in der Mitte des zugehörigen Intervalls, dann liegt auch die Leistung in ihrem zugehörigen Intervall. Dieser Sachverhalt wird durch die in (22) enthaltene Geradengleichung umgesetzt. Aus der so ermittelten Leistung kann darüber hinaus durch Multiplikation mit der Dauer der zugehörige Energieverbrauch ermittelt werden. Dabei ist zu beachten, dass für $f_{e,t,c}^1$ diese Multiplikation bereits implizit in Nebenbedingung (5) erfolgt sein kann. Auch hier kann wobei analog zu (21) eine Umrechnung der Zeiteinheit von Sekunden in Stunden erforderlich sein, um die Leistung in kWh zu erhalten.

$$(23) \quad g_{e,t,c}^2 = \pi_{e,c}^{min} \cdot d_{e,t,c}^2 \cdot \frac{1}{3600} \cdot \frac{h}{s} \qquad (e \in E, t \in T, c \in C_e : \phi_{e,c}^{min} = \phi_{e,c}^{max})$$

Nebenbedingung (23) ist das Analogon zu Nebenbedingung (21) für den Zeitabschnitt vom potentiellen Schaltzeitpunkt bis zum Ende der zugehörigen Zeitscheibe $t$.

$$(24) \quad g_{e,t,c}^2 = \left( \pi_{e,c}^{min} \cdot d_{e,t,c}^2 + \frac{\pi_{e,c}^{max} - \pi_{e,c}^{min}}{\phi_{e,c}^{max} - \phi_{e,c}^{min}} \cdot (f_{e,t,c}^2 - \phi_{e,c}^{min} \cdot d_{e,t,c}^2) \right) \cdot \frac{1}{3600} \cdot \frac{h}{s}$$
$$(e \in E, t \in T, c \in C_e : \phi_{e,c}^{min} \neq \phi_{e,c}^{max})$$

Nebenbedingung (24) ist das Analogon zu Nebenbedingung (22) für den Zeitabschnitt vom potentiellen Schaltzeitpunkt bis zum Ende der zugehörigen Zeitscheibe $t$.

**Zielfunktion**

In diesem Abschnitt wird die zu optimierende Zielfunktion definiert. Wie oben bereits eingeführt wurde, wird bei der Zielfunktion von einer Kostenfunktion ausgegangen, die minimiert werden soll.

$$(25) \quad \sum_{e \in E} \omega_e^{SW} \cdot \left( \sum_{t \in T} m_{e,t} + \sum_{t \in T \setminus \{t_1\}} n_{e,t} \right)$$

Formel (25) beschreibt die Kosten, die mit den Schaltungen aller Kantenkomponenten $e$ assoziiert sind. Hierfür wird für jede Kantenkomponente $e$ die Anzahl aller mit den Variablen $m_{e,t}$ und $n_{e,t}$ ermittelten Schaltungen mit dem zugehörigen Kostensatz $\omega_e^{SW}$ multipliziert und anschließend die Summe über alle Kantenkomponenten gebildet. De facto ist man jedoch nur an der Minimierung der Schaltungen von Pumpen interessiert und wählt daher bevorzugt $\omega_e^{SW} = 0$ für alle Kantenkomponenten, die keine Pumpen oder Turbinen sind.

$$(26) \quad \sum_{e \in E} \sum_{t \in T} \omega_{e,t}^{en} \cdot \left( \sum_{c \in C_e} (g_{e,t,c}^1 + g_{e,t,c}^2) \right)$$

Formel (26) beschreibt die aus der Betriebsstrategie der Kantenkomponenten resultierenden Energiekosten. Hierfür wird der Energieverbrauch jeder Kantenkomponente *e* in jeder möglichen Betriebskonfiguration *c* und in jedem Zeitschritt *t* berechnet (dieser entspricht $g_{e,t,c}^1 + g_{e,t,c}^2$) und dann mit dem entsprechenden Energiekostensatz $\omega_{e,t}^{en}$ multipliziert. Anschließend wird Summe über alle Einzelkosten in den jeweiligen Zeitschritten und für alle Kantenkomponenten gebildet, um die Gesamt-Energiekosten zu erhalten.

**Erweiterungs- und Anpassungsmöglichkeiten für neue Modellvarianten**

Der Ansatz, die Betriebsstrategie eines Wasserversorgungsnetzes mit Hilfe eines gemischt-ganzzahligen linearen Programms zu ermitteln, bietet den Vorteil von hoher Flexibilität, das sich insbesondere durch eine Vielzahl von Anpassungsmöglichkeiten bei der Definition von Nebenbedingungen und der Gestaltung einer Zielfunktion zeigt.

Im Folgenden werden optionale Erweiterungen der oben beschriebenen Vorgehensweise kurz vorgestellt. Die Optionen sind rein beispielhaft und stehen stellvertretend für eine Vielzahl möglicher Varianten und Ausführungsformen des Verfahrens. Auf eine detaillierte mathematische Ausformulierung wird in diesem Abschnitt verzichtet.

**Synchronisation von Betriebs-Konfigurationen der Kantenkomponenten**

Statt die Kantenkomponenten alle einzeln als individuelle und unabhängige Komponenten zu optimieren, kann es sinnvoll sein, z. B. Pumpen in Pumpstationen zusammenzufassen, für die ebenfalls Betriebs-Konfigurationen definiert werden können. Beispielsweise können für eine Pumpenstation mit drei funktionsgleichen Pumpen A, B und C die Konfigurationen "alle Pumpen aus", "nur Pumpe A an", "Pumpen A und B an", und "alle Pumpen an" definiert werden. Die Einführung einer solchen Pumpstation kann sowohl dazu dienen nur technisch sinnvolle Zustands-Kombinationen von Kantenkomponenten zuzulassen, als auch dabei helfen, bei der Optimierung Rechenzeit einzusparen, da z. B. äquivalente Zustands-Kombinationen von Kantenkomponenten (Symmetrien) vermieden werden können. Die Kombinatorik des Planungsproblems kann dadurch unter Umständen drastisch reduziert werden. Eine entsprechende Gruppenbildung ist auch für Kombinationen beliebiger anderer Kantenkomponenten denkbar.

**Zusammenfassung von mehreren Betriebs-Konfigurationen in Zustandsklassen**

Zusätzlich zu diesem Erweiterungsgedanken kann eine konkrete Betriebs-Konfiguration der Kantenkomponenten auch in einer Zustandsklasse zusammengefasst werden. Beispielsweise könnte für eine Pumpstation mit drei unterschiedlichen Pumpen A, B und C die Zustandsklasse "genau eine Pumpe ist aktiv" einführen, in der die drei konkreten Betriebs-Konfigurationen "nur Pumpe A ist an", "nur Pumpe B ist an" und "nur Pumpe C ist an" zusammengefasst werden. Dies kann bei der Definition der technisch sinnvollen Kombinationen von Betriebs-Konfigurationen der Kantenkomponenten zur Reduktion der Kombinatorik ebenfalls sehr hilfreich sein.

**Vorgegebene aktive Zustandsklassen**

In manchen Planungsinstanzen kann es gewünscht sein, dem Optimierer nicht die volle Entscheidungsfreiheit über bestimmte Aspekte der Lösung einzuräumen. Stattdessen kann es gewünscht sein manche Entscheidungen bereits durch eine Fixierung oder Teilfixierung fest vorzugeben. Ein Beispiel hierfür wäre eine Wartung einer Pumpstation, bei der alle Pumpen ausgeschaltet sein müssen. In diesem Fall kann die Wartung auf eine oder mehrere entsprechende Zeitscheiben gelegt werden und dort können Betriebs-Konfigurationen aller Pumpen auf "Pumpe aus" vordefiniert werden. Entsprechendes kann für die oben beschriebenen Zustandsklassen durchgeführt werden. So könnte für eine Pumpstation einfach gefordert werden, dass in den zur Wartung gehörenden Zeitscheiben die Zustandsklasse "alle Pumpen aus" aktiv sein muss. Die zugehörigen Zustandsfixierungen oder Zustandsteilfixierungen können dem Optimierer dann als zusätzliche Nebenbedingungen mitgegeben werden, sodass diese Vorgaben bei der Optimierung berücksichtigt werden müssen.

**Unterscheidung von Schaltungen**

Im oben eingeführten Modell gibt es zunächst nur eine pauschale Art der Schaltung. In der Praxis kann es aber interessant sein, dass es wichtiger ist An/Aus-Schaltungen der Pumpen zu vermeiden als Schaltungen zwischen verschiedenen operativen Betriebs-Konfigurationen zu minimieren. Auch dies lässt sich durch die Einführung unterschiedlicher Schaltungsvariablen, die in der Zielfunktion mit entsprechend unterschiedlichen Kostensätzen versehen werden, in das angegebene Modell integrieren.

### Wasserkosten

Natürlich lässt sich auch der Wasserverbrauch in den Knotenkomponenten (insbesondere den Einspeisern) mittels einer Kostenfunktion bewerten und in die Zielfunktion integrieren, sodass die mit dem Fließen von Wasser verbundenen Kosten ebenfalls in die Optimierung eingehen. Dies erfordert auf der Eingabeseite von Daten entsprechende Kostensätze für Wasser pro Volumen bei den unterschiedlichen Einspeisern. Dabei könne auch Zeitreihen unterstützt werden, falls die Preise zeitlich nicht konstant sind.

### Turbinen zur Energiegewinnung

In unserer Modellbeschreibung wurden nur drei Typen von Kantenkomponenten eingeführt: Rohre, Ventile und Pumpen. Dieser Ansatz lässt sich auf einfache Art und Weise durch Turbinen erweitern. Turbinen werden als "inverse Pumpen" interpretiert und erlauben somit auch die Integration einer Energie-Rückgewinnungs-Möglichkeit. Der mit Turbinen assoziierte "Energieverbrauch" ist somit negativ zu modellieren.

### Tages-Gesamtabgabemenge von Wasserquellen

Zusätzlich zu den von den Zeitscheiben abhängigen Wasser-Abgabe-Raten kann auch die im betrachteten Planungshorizont geltende Gesamt-Kapazität für die Wasser-Abgabe von Einspeisern modelliert und in die Optimierung mit einbezogen werden, z. B. durch die Vorgabe einer maximalen Tages-Gesamtabgabemenge.

### Beschränkung der Energieverfügbarkeit

In obigem Modell wird die zum Betrieb der Pumpen benötigte Energie als unbeschränkt verfügbar angenommen. Natürlich lassen sich auch obere Schranken für den Energieverbrauch in das Modell integrieren. Hierfür könnte man beispielsweise eine Zuordnung der Pumpen zu Energie-Versorgern zunehmen, die im Planungshorizont nur eine bestimmte maximale Abgabe-Leistung gewährleisten.

### Nur durch Rohre verbundene Tanks

Aufgrund einer fehlenden Berücksichtigung von Wasserdrücken im Wasserversorgungsnetz und der zeitlichen Aggregation handelt es sich bei dem vorgestellten Modell um eine Möglichkeit zur Grobplanung des Wasserversorgungsnetzes bzw. Seiner Steuerung. Dennoch können auch in dieses Modell noch weitere physikalische Rahmenbedingungen integriert werden, deren Fehlen ansonsten zu unrealistischen Planungsresultaten führen können. Ein Beispiel hierfür sind Tanks, die ausschließlich über Rohre miteinander verbunden sind. In diesem Fall können zusätzliche Bedingungen eingeführt werden, die dafür sorgen, dass der Füllstand dieser Tanks dann stets demselben Niveau über Normalnull entsprechen muss.

### Analyse unzulässiger Planungsszenarien

Das beschriebene mathematische Modell beinhaltet zahlreiche obere und untere Schranken, die die Wertebereiche für die Variablen festlegen. Es ist daher leicht, Instanzen zu erzeugen, die keine zulässige Lösung besitzen, weil die gewählten Schranken nicht zueinander passen. In diesem Fall können aus den harten, also unveränderbaren Nebenbedingungen sogenannte Soft-Constraints gemacht werden, indem eine Verletzung der Schranken erlaubt wird, diese Überschreitung aber mit sehr hohen Kosten in der Zielfunktion beaufschlagt wird. Auf diese Art und Weise ist es möglich, bei der Planung eines Wasserversorgungsnetzes, eines Teilnetzes oder einer Komponente eine Aussage darüber zu erhalten, an welchen Stellgrößen man drehen sollte, um im Fall einer unzulässigen Instanz mit möglichst wenigen Anpassungen zu einer betriebs-fähigen Anlagen-Architektur zu gelangen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren (200) zum Steuern eines Wasserversorgungsnetzes (100), das Knotenkomponenten (105) und Kantenkomponenten (110) umfasst, wobei die Kantenkomponenten (110) Wasser zwischen den Knotenkomponenten (105) transportieren, wobei zumindest eine der Kantenkomponenten (110) bezüglich ihres Durchflussverhaltens für Wasser steuerbar sind, und wobei das Verfahren (200) folgende Schritte umfasst:

   - Bestimmen (205) eines Planungshorizonts, der eine Anzahl Zeitscheiben umfasst;
   - Bestimmen (210) von oberen und unteren Grenzen für Einspeisungen von Wasser ins Wasserversorgungsnetz (100) in den Zeitscheiben;
   - Bestimmen (215) von voraussichtlichen Entnahmen von Wasser aus dem Wasserversorgungsnetz (100) in den Zeitscheiben;
   - Bestimmen (220) möglicher Betriebskonfigurationen der wenigstens einen Kantenkomponente (110);
   - Bestimmen (225) von Energiekosten für eine Ansteuerung der steuerbaren Kantenkomponenten (110) in den Zeitscheiben;
   - Bestimmen (227) von zulässigen Zuständen von Knotenkomponenten (105) des Wasserversorgungsnetzes (100);
   - Bestimmen (230) von Anfangszuständen von Komponenten (105, 110) des Wasserversorgungsnetzes (100);
   - Bestimmen (235) eines Steuerplans (170) für die wenigstens eine steuerbare Kantenkomponente (110) auf der Basis der bestimmten Informationen derart, dass eine vorbestimmte Wasserbilanz des Wasserversorgungsnetzes (100) in jeder Zeitscheibe (180) im zeitlichen Mittel eingehalten ist;
   - wobei der Steuerplan (170) eine zeitliche Abfolge von Ansteuerungen der wenigstens einen Kantenkomponente (105) umfasst;

   **dadurch gekennzeichnet, dass**

   - der Steuerplan (170) einen Übergang zwischen unterschiedlichen Ansteuerungen der wenigstens einen Kantenkomponente (110) nur einmal in jeder Zeitscheibe und einmal an einem Übergang von einer Zeitscheibe zur folgenden erlaubt.

2. Verfahren (200) nach Anspruch 1, wobei die weiteren Übergänge zwischen unterschiedlichen Ansteuerungen mehrerer Kantenkomponenten (110) gleichzeitig erfolgen.

3. Verfahren (200) nach Anspruch 1 oder 2, wobei der Steuerplan (170) für mehrere steuerbare Kantenkomponenten (110) erstellt wird und die zeitlichen Abfolgen der Ansteuerungen der Kantenkomponenten (110) aufeinander abgestimmt sind.

4. Verfahren (200) nach einem der vorangehenden Ansprüche, wobei der Steuerplan (170) derart bestimmt wird, dass eine Menge Wasser, die in einer Zeitscheibe (180) an einer Knotenkomponente (105) gespeichert ist, der in der Knotenkomponente (105) in einer vorangehenden Zeitscheibe (180) gespeicherten Menge Wasser, zuzüglich einer einfließenden Menge Wasser und abzüglich einer abfließenden Menge Wasser entspricht.

5. Verfahren (200) nach einem der vorangehenden Ansprüche, wobei eine Betriebskonfiguration eine zulässige Durchflussrate von Wasser und einen zulässigen Energieverbrauch einer steuerbaren Kantenkomponente (110) umfasst.

6. Verfahren (200) nach einem der vorangehenden Ansprüche, wobei die Knotenkomponenten (105) einen Tank umfassen und ein Zustand des Tanks ein Intervall zulässiger Füllstände betrifft.

7. Verfahren (200) nach einem der vorangehenden Ansprüche, wobei die wenigstens eine Kantenkomponente (110) eine aktive Einrichtung (140) umfasst, deren Energieaufnahme von ihrer Ansteuerung abhängig ist und wobei der Steuerplan (170) derart bestimmt wird, dass die Summe der Energieaufnahmen aller Kantenkomponenten (110) über den gesamten Planungshorizont (175) möglichst gering ist.

8. Verfahren (200) nach einem der vorangehenden Ansprüche, wobei der Steuerplan (170) derart bestimmt wird, dass Kosten, die den Schaltungen einer Kantenkomponente (110) zugeordnet sind, möglichst minimiert werden.

9. Verfahren (200) nach einem der vorangehenden Ansprüche, wobei die wenigstens eine Kantenkomponente (110) wenigstens eine aktive Einrichtung (140) umfasst und die zeitlichen Abfolgen der Ansteuerungen der Kantenkomponenten (110) so bestimmt werden, dass eine gesamte Leistung der aktiven Kantenkomponenten (140) eine vorbestimmte Leistung nicht übersteigt.

10. Verfahren (200) nach einem der vorangehenden Ansprüche, wobei eine der steuerbaren Kantenkomponenten (110) eine aktive Einrichtung (145) umfasst, deren Energieaufnahme negativ sein kann.

11. Verfahren (200) nach einem der vorangehenden Ansprüche, wobei der Steuerplan (170) mittels eines gemischt-ganzzahligen linearen Programms bestimmt wird.

12. Vorrichtung (168) zur Steuerung eines Wasserversorgungsnetzes (100), das Knotenkomponenten (105) und Kantenkomponenten (110) umfasst, wobei die Kantenkomponenten (110) Wasser zwischen den Knotenkomponenten (105) transportieren, wobei zumindest eine der Kantenkomponenten (110) bezüglich ihres Durchflussverhaltens für Wasser steuerbar ist, und wobei die Vorrichtung (168) eine Verarbeitungseinrichtung umfasst, die dazu eingerichtet ist,

- in einer Anzahl Zeitscheiben (180), in die ein Planungshorizont (175) unterteilt ist,
- auf der Basis von oberen und unteren Grenzen für Einspeisungen von Wasser ins Wasserversorgungsnetz (100)
- sowie voraussichtlicher Entnahmen von Wasser aus dem Wasserversorgungsnetz (100) in den Zeitscheiben;
- möglichen Betriebskonfigurationen der wenigstens einen Kantenkomponente (110);
- Energiekosten für eine Ansteuerung der steuerbaren Kantenkomponenten (110) in den Zeitscheiben (180);
- zulässigen Zuständen von Knotenkomponenten (105) des Wasserversorgungsnetzes (100); und
- Anfangszuständen von Komponenten (105, 110) des Wasserversorgungsnetzes (100)
- einen Steuerplan (170) für wenigstens eine der steuerbaren Kantenkomponenten (110) derart zu bestimmen, dass eine vorbestimmte Wasserbilanz des Wasserversorgungsnetzes (100) in jeder Zeitscheibe (180) im zeitlichen Mittel eingehalten ist;
- wobei der Steuerplan (170) eine zeitliche Abfolge von Übergängen zwischen unterschiedlichen Ansteuerungen der wenigstens einen steuerbaren Kantenkomponenten (110) nur einmal in jeder Zeitscheibe (180) und einmal an einem Übergang von einer Zeitscheibe (180) zur folgenden erlaubt.

13. Vorrichtung (168) nach Anspruch 12, ferner umfassend eine Schnittstelle (185) zur Verbindung mit der wenigstens einen Kantenkomponente (110), wobei die Verarbeitungseinrichtung (168) dazu eingerichtet ist, die Kantenkomponente (110) in Abhängigkeit des bestimmten Steuerplans (170) anzusteuern.

FIG 1

EP 3 450 638 A1

# FIG 2

**Europäisches Patentamt**
**European Patent Office**
**Office européen des brevets**

# EUROPÄISCHER RECHERCHENBERICHT

Nummer der Anmeldung

EP 17 18 8473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/090440 A1 (ECK BRADLEY [IE] ET AL) 30. März 2017 (2017-03-30) <br> * Absatz [0007] - Absatz [0008] * <br> * Absatz [0002] - Absatz [0004] * <br> * Absätze [0009], [0066] * <br> * Absatz [0048] - Absatz [0049] * <br> * Absätze [0027], [0032] * | 1-13 | INV. <br> E03B7/02 <br> G05B15/02 <br> G06Q50/06 |
| A | US 2007/130093 A1 (HAJI-VALIZADEH ALIREZA [US]) 7. Juni 2007 (2007-06-07) <br> * Absatz [0014] * | 1-13 | |
| A | Bene József Gergely: "Pump Schedule Optimisation Techniques For Water Distribution Systems", ACTA Universitatis Ouluensis Technica C 472, 18. November 2013 (2013-11-18), XP055415987, http://jultika.oulu.fi/Record/isbn978-952-62-0266-2 ISBN: 978-952-6202-66-2 Gefunden im Internet: URL:http://jultika.oulu.fi/files/isbn97895 26202662.pdf [gefunden am 2017-10-16] * Abschnitt 1.3.1; Seiten 27,30 * | 1-13 | **RECHERCHIERTE SACHGEBIETE (IPC)** <br><br> E03B <br> G05B <br> G06Q |

Der vorliegende Recherchenbericht wurde für alle Patentansprüche erstellt

| Recherchenort | Abschlußdatum der Recherche | Prüfer |
|---|---|---|
| München | 16. Oktober 2017 | Thielemann, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 18 8473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2017

| Im Recherchenbericht angeführtes Patentdokument | Datum der Veröffentlichung | Mitglied(er) der Patentfamilie | Datum der Veröffentlichung |
|---|---|---|---|
| US 2017090440 A1 | 30-03-2017 | KEINE | |
| US 2007130093 A1 | 07-06-2007 | KEINE | |

EPO FORM P0461

Für nähere Einzelheiten zu diesem Anhang : siehe Amtsblatt des Europäischen Patentamts, Nr.12/82